Europäisches Patentamt

European Patent Office

Office européen des brevets

(19)

(11) Veröffentlichungsnummer : **0 211 852**
**B1**

(12) **EUROPÄISCHE PATENTSCHRIFT**

(45) Veröffentlichungstag der Patentschrift :
11.10.89

(51) Int. Cl.⁴ : **B 23 K    9/02**

(21) Anmeldenummer : **86900770.8**

(22) Anmeldetag : **23.01.86**

(86) Internationale Anmeldenummer :
**PCT/EP 86/00026**

(87) Internationale Veröffentlichungsnummer :
**WO/8604281 (31.07.86 Gazette 86/17)**

(54) SCHWEISSVORRICHTUNG FÜR EIN ZYLINDRISCHES ROHR.

(30) Priorität : 29.01.85 DE 8502277 U
10.12.85 DE 3543575

(43) Veröffentlichungstag der Anmeldung :
04.03.87 Patentblatt 87/10

(45) Bekanntmachung des Hinweises auf die Patenterteilung : 11.10.89 Patentblatt 89/41

(84) Benannte Vertragsstaaten :
AT BE CH DE FR GB IT LI LU NL SE

(56) Entgegenhaltungen :
DE—A— 1 615 932
FR—A— 1 411 529
US—A— 3 722 778
US—A— 4 347 421

(73) Patentinhaber : **Tesch, Klaus**
**Dorotheenstrasse 123**
**D-2000 Hamburg 60 (DE)**

(72) Erfinder : **Tesch, Klaus**
**Dorotheenstrasse 123**
**D-2000 Hamburg 60 (DE)**

(74) Vertreter : **Glawe, Delfs, Moll & Partner Patentanwälte**
**Postfach 26 01 62 Liebherrstrasse 20**
**D-8000 München 26 (DE)**

## Beschreibung

Die Erfindung betrifft eine Vorrichtung zum Anbringen einer Umfangsschweißnaht an einem zylindrischen Rohr, die auf das Rohr aufsetzbar ist und mit einem Drehantrieb für eine Rotationsbewegung des Schweißwerkzeuges um die Rohrachse versehen ist, und die mehrere an der Vorrichtung befestigte, in Umfangsrichtung in einem Abstand angeordnete, drehbare Rollen aufweist, von denen mindestens eine zwischen Schwenkarmen, die an plattenförmigen Elementen schwenkbar befestigt sind, angeordnet und an denselben drehbar gelagert und mit dem Antrieb verbunden ist, wobei in Querschnittsrichtung des Rohrs der Raum zwischen den Rollen bei wenigstens teilweise weggeschwenkter Antriebsrolle eine seitliche Einführöffnung mit größeren Abmessungen als das Rohr aufweist.

In vielen Fällen müssen Umfangsschweißnähte an zylindrischen Rohren angebracht werden, um solche Rohre miteinander zu verschweißen. Dabei ist häufig der Raum, den man um das Rohr herum zur Verfügung hat, sehr begrenzt. Sollen z. B. Rohrpostleitungen verlegt werden, so will man diese Leitungen selbstverständlich, damit sie nicht unnötig viel Platz verschwenden, möglichst nahe an Decken oder Wänden anbringen ; außerdem können mehrere Rohre nebeneinander angeordnet sein, so daß man sie möglichst nahe aneinander verlegen will. Aus diesem Grunde ist das Rohr für manuelles Schweißen nicht von allen Seiten zugänglich. Außerdem möchte man häufig die Ungenauigkeiten und Ungleichmäßigkeiten des von Hand durchgeführten Schweißens vermeiden und lieber automatische Vorrichtungen verwenden.

Aus diesem Grunde ist eine Vorrichtung bekannt, die ungefähr folgende Wirkungsweise hat. Ein Teil einer Vorrichtung wird am Rohr an der gewünschten Stelle festgeklemmt. Dieser Teil weist einen Motor auf, dessen größte Längserstreckung sich senkrecht vom Rohr wegerstreckt, damit man den Motor gleichzeitig als Handgriff verwenden kann. Der Motor treibt dann einen Zahnkranz an, der aus mehreren Teilen besteht und so um das Rohr herumgelegt wird, daß er dasselbe umschließt. Dieser Zahnkranz wird dann durch den Motor angetrieben ; ein wiederum mit dem Zahnkranz verbundenes Schweißwerkzeug führt so eine Umdrehung um das Rohr aus, so daß die Umfangsschweißnaht angefertigt werden kann.

Der Nachteil dieser Vorrichtung ist einmal, daß sie kompliziert aufgebaut ist. Das Öffnen des Zahnkranzes, um ihn um das Rohr herumzulegen, und das anschließende Schließen, um einen ununterbrochenen Zahnkranz zu erhalten, ist kompliziert. Schließlich benötigt auch der senkrecht vom Rohr abstehende Motor ziemlich viel Raum, ganz abgesehen davon, daß der Antrieb über den Zahnkranz Probleme bereiten kann, wenn der aus mehreren Teilen bestehende Zahnkranz nicht einwandfrei ist.

Diese Nachteile werden bei einer Vorrichtung der eingangs genannten Art (US-A-3 722 778) zumindest teilweise vermieden. Der Nachteil dieser Vorrichtung ist aber, daß sie sehr kompliziert aufgebaut ist. Es sind nämlich alle Rollen, auch die oberen leerlaufenden Rollen schwenkbar angeordnet. Aus der Entgegenhaltung kann man nur den Schluß ziehen, daß offenbar vier Rollen benötigt werden, um die Schweißvorrichtung auf dem Rohr zu halten und zu führen, die dazu durch sehr aufwendige Mechanismen gleichmäßig gegen das Rohr gedrückt werden müssen, da sonst die Schweißvorrichtung nicht zuverlässig auf dem Rohr sitzt und auf demselben durch den Antriebsmotor gedreht werden kann.

Eine andere Schweißvorrichtung (FR-A-1 411 529) ist zwar einfacher aufgebaut, indem sie nur drei Rollen aufweist, mit denen sie am zu schweißenden Rohr anliegt. Eine Rolle ist dabei beweglich, wird aber nicht geschwenkt, sondern durch Federkraft gegen das Rohr gedrückt. Diese sehr einfach aufgebaute Vorrichtung ist aber lediglich dazu bestimmt, den Schweißkopf zu führen. An einen motorischen Antrieb ist nicht gedacht. Es soll dem Schweißer. lediglich die Aufgabe abgenommen werden, den verhältnismäßig leichten Schweißkopf nicht von Hand führen zu müssen.

Die Aufgabe der Erfindung besteht in der Schaffung einer Vorrichtung der eingangs genannten Art, die einfach aufgebaut ist und trotzdem zuverlässig arbeitet.

Die erfindungsgemäße Lösung besteht darin, daß zwei fest angeordnete und nur eine weitere schwenkbare mit dem Antrieb verbundene Rolle vorgesehen sind und daß an den Schwenkarmen eine Zugstange mit einer mit Hilfe einer Schraube und einer Mutter einstellbaren Federkraft zum Drücken der Antriebsrolle gegen das Rohr angreift. .

Um eine Schweißung durchzuführen, wird die Vorrichtung so auf das Rohr gesetzt, daß sich das Rohr in der Einführöffnung befindet. Gegenüber der Einführöffnung kommt das Rohr dabei mit den zwei fest angeordneten drehbaren Rollen in Berührung. Anschließend wird dann die dritte Rolle gegen das Rohr geschwenkt, so daß sie am Rohr an drei Punkten von Rollen festgehalten wird. Die dritte Rolle ist mit dem Antrieb verbunden ; wird derselbe betätigt, so rotiert die gesamte Vorrichtung um das feststehende Rohr, und die Schweißung kann durchgeführt werden.

Dabei kann die größte Längserstreckung des Motors, die normalerweise diejenige in Axialrichtung ist, parallel zum Rohr sein, da dann nämlich keine komplizierte Kraftübertragung notwendig ist, sondern die Antriebsrolle direkt auf die Antriebswelle des Motors gesetzt werden kann.

Damit sich die Schweißvorrichtung nicht verkantet, müssen die Rollen entsprechend lang sein. Zweckmäßigerweise sieht man aber vor, daß die rollen als Rollenpaare ausgebildet sind, insbesondere die feststehenden Rollen. Ist dann die Antriebsrolle als Einzelrolle zwischen den beiden Rollen jedes Rollenpaares angeordnet, so erhält man eine stabile Lagerung der Vorrichtung.

Vorteilhafterweise sind die Rollen kugelgelagert, um keine zu große Antriebsleistung zu benötigen. Auch die Antriebsrolle wird zweckmäßigerweise außerhalb des Motors noch kugelgelagert, damit keine seitliche Belastung der Antriebswelle des Motors auftritt, durch die der Motor beschädigt werden könnte.

Vorteilhafterweise ist das Schweißwerkzeug (der Schweißkopf) an einem schwenkbaren Arm befestigt, da man so zu Kontrollzwecken, Einstellzwecken und dergleichen den Schweißkopf leicht vom Rohr wegschwenken kann. Ist der schwenkbare Arm dabei federbelastet, so wird das Schweißwerkzeug einerseits in einen gewünschten Abstand vom Werkstück gebracht, vermag aber doch auszuweichen, falls hier zum Beispiel bei einem beschädigten Rohr ein Vorsprung das Schweißwerkzeug berühren sollte. Durch entsprechende Wahl der Feder kann auch erreicht werden, daß der schwenkbare Arm nicht nur in der Arbeitsstellung in Richtung auf das Rohr federbelastet ist, sondern auch in der geöffneten Stellung in eine Öffnungsstellung, so daß bei weggeschwenktem Schweißwerkzeug dieses auch in dieser Lage bleibt.

Wenn der schwenkbare Arm auch um seine Längsachse drehbar ist, so ist die Vorrichtung leichter zu handhaben, insbesondere der Schweißkopf leichter zugänglich.

Verschiedenen Schweißbedingungen, verschieden großen Schweißköpfen oder einer möglichen Abnutzung des Schweißkopfes kann die Vorrichtung leichter angepaßt werden, wenn sie einen verstellbaren Anschlag für den Arm aufweist. Der Abstand des Schweißwerkzeuges vom Rohr kann dabei einmal dadurch geregelt werden, daß der schwenkbare Arm gegen einen Anschlag am Gestell der Schweißvorrichtung anliegt. Der verstellbare Anschlag kann aber auch am schwenkbaren Arm befestigt sein und während des Betriebes in Berührung mit dem Rohr sein.

Wenn das Schweißwerkzeug am Arm schwenkbar befestigt ist, so kann es auf unterschiedliche Winkel in bezug auf die Rohroberfläche eingestellt werden, damit zum Beispiel Rohrmuffen auf das Rohr geschweißt werden können. Insbesondere kann das Schweißwerkzeug um 360° schwenkbar sein, da es so besonders vielseitig einzusetzen ist.

Das Verschweißen der genannten Rohre findet zweckmäßigerweise durch Schutzgasschweißen statt. Ist dabei vorgesehen, daß die Strom- und Schutzgasleitung im Falle, wenn das Schweißwerkzeug schwenkbar am Arm befestigt ist, durch die Schwenkachse verlaufen, sind hier keine zusätzlichen aufwendigen Leitungen erforderlich, durch die das Schwenken des Schweißwerkzeuges behindert würde.

Die erfindungsgemäße Vorrichtung zeichnet sich dadurch aus, daß sie sehr wenig Platz benötigt. Erfindungsgemäß ist bei einer vorteilhaften Ausführungsform vorgesehen, daß sie weniger als 6 cm vom Rohr absteht.

Es sollte noch bemerkt werden, daß die Vorrichtung für verschiedene Rohrdurchmesser verwendet werden kann, da die Antriebsrolle schwenkbar ist und so die Abstände zwischen den drei Rollen, die das Rohr berühren, innerhalb weiter Grenzen frei wählbar sind.

Die Vorrichtung kann insbesondere auch dann für verschiedene Rohrdurchmesser verwendet werden, d. h. auch für wesentlich größere und wesentlich kleinere Rohrdurchmesser, wenn die fest angeordneten Rollen und die Schwenkarme für die Antriebsrolle zwischen zwei Platten angeordnet sind, mit denen sie lösbar verbunden sind. Um ein Rohr mit wesentlich größerem und wesentlich kleinerem Durchmesser, als dies vorher der Fall war, zu schweißen, brauchen dann lediglich diese beiden Platten ausgewechselt zu werden.

Sieht man noch vor, daß die Vorrichtung demontierbare Verlängerungsachsen mit daran drehbar gelagerten Zusatzrollen aufweist, so kann sie auch zum Heftschweißen noch nicht miteinander verbundener Rohre benutzt werden, so daß eine zusätzliche Vorrichtung zum Heftschweißen nicht erforderlich ist.

Für das Heftschweißen braucht die Vorrichtung nicht einmal auf das Rohr gesetzt zu werden, wenn der Arm für das Schweißwerkzeug lösbar am Gerät befestigt ist. Der Arm mit dem Schweißwerkzeug kann so zum Beispiel zum Heftschweißen oder für andere Einsätze, bei denen von Hand gehalten wird, vom Gerät gelöst werden. Das Schweißwerkzeug ist so auf besonders vielfältige und vielseitige Art zu verwenden.

Ist der Arm in nach außen offene Ausnehmungen der Platten einführbar und durch eine in Richtung der Rohrerstreckung offene Ausnehmung, die mit einer Schwenkachse umgreift, schwenkbar gehalten, so ist einerseits die Schwenkbarkeit und andererseits auch die Lösbarkeit des Arms gewährleistet.

Der Schwenkarm wird dabei durch die Kraft der Feder mit der offenen Ausnehmung auf die Schwenkachse gedrückt, da der Schwenkarm in Richtung auf das Rohr bzw. in die offene Stellung federbelastet ist. Soll der Arm gelöst werden, so muß er nur entgegen der Federkraft von der Schwenkachse weggezogen werden.

Wenn die Schwenkachse noch in Rohrrichtung verstellbar ist, so kann auch die exakte Position des Schweißwerkzeuges in Richtung der Rohrerstreckung leicht einjustiert werden.

Schließlich kann noch ein veränderbarer Anschlag für den Arm für das Schweißwerkzeug vorgesehen sein, wobei dieser Anschlag eine Ruhestellung definiert, indem das Schweißwerkzeug einen größeren Abstand als normal vom zu schweißenden Rohr hat. Wird dieser Anschlag dann weggeschwenkt, durch seitliche Verschiebung weggedrückt oder dergleichen, so nähert sich das Schweißwerkzeug bis auf die durch einen weiteren Anschlag festgelegte Entfernung, die der idealen Entfernung zum Schweißen entspricht. Dabei kann dieser zweite Anschlag direkt am Schwenkarm vorgesehen sein.

Die Erfindung wird im folgenden anhand einer vorteilhaften Ausführungsform unter Bezugnahme auf die beigefügten Zeichnungen beschrieben. Es zeigen :

Fig. 1 eine Stirnansicht der erfindungsgemäßen Vorrichtung, gesehen in Längsrichtung des Rohres ;

Fig. 2 eine Seitenansicht der Vorrichtung der Fig. 1 ;

Fig. 3 einen Schnitt durch den Schweißkopf und dessen Befestigung ;

Fig. 4 eine Detailansicht eines Anschlages für den schwenkbaren Arm für den Schweißkopf, gesehen von derselben Seite wie bei Fig. 1 ; und

Fig. 5 in einer ähnlichen Ansicht wie Fig. 2 eine Vorrichtung mit aufgesetzten Zusatzrollen ; und

Fig. 6 in einer Ansicht von oben eine andere Art der Lagerung des Schwenkarms für das Schweißwerkzeug.

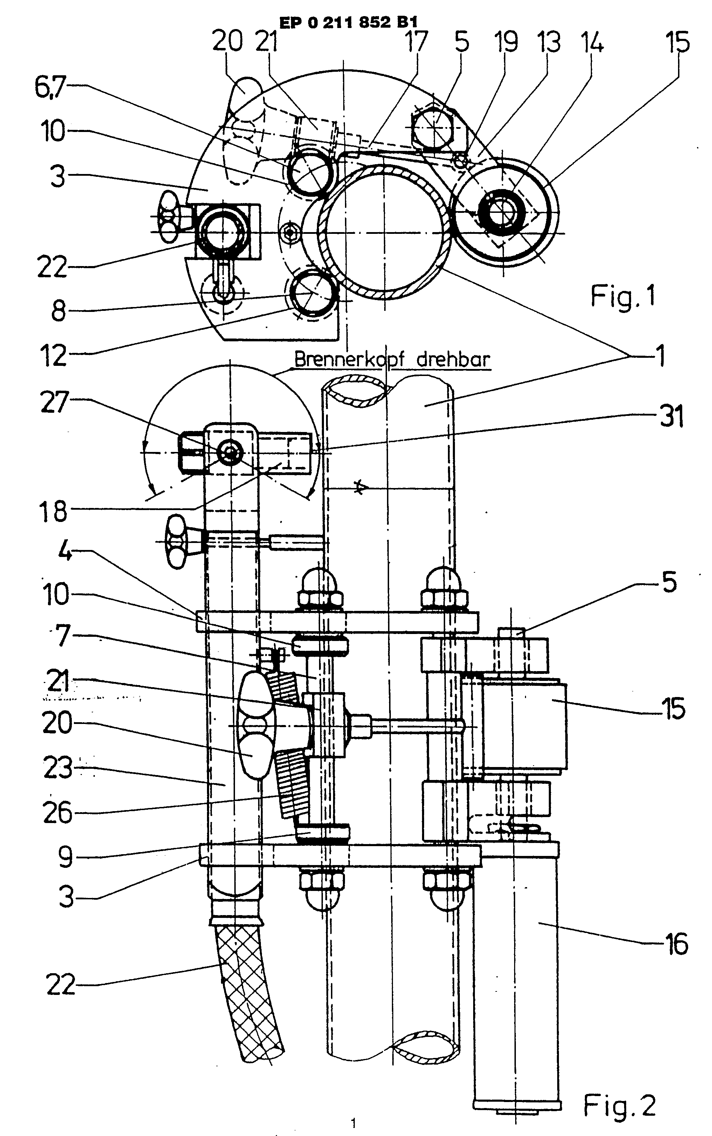

In den Fig. 1 und 2 ist ein Rohr 1 dargestellt, das mit einer Schweißnaht versehen werden soll.

Die Vorrichtung weist zwei plattenförmige Elemente 3 und 4 auf, die das Rohr 1 teilweise umgreifen. Die beiden Platten 3 und 4 werden durch mehrere stangenförmige Elemente 5, 6, 7 und 8 in einem Abstand voneinander gehalten. Auf den stangenförmigen Elementen 7 und 8 sind Rollen angebracht, und zwar jeweils zwei Rollen in der Nähe der plattenförmigen Elemente 3 und 4. Auf dem stangenförmigen Element 7 sind Rollen 9 und 10, auf dem stangenförmigen Element 8 Rollen 11 (nicht gezeigt) und 12 angebracht ; diese Rollen sind kugelgelagert. Am stangenförmigen Element 5 ist mit Hilfe eines schwenkbaren Hebelarms 13 und eines daran angeordneten Lagers 14 eine Antriebsrolle 15 und ein damit verbundener Antriebsmotor 16 schwenkbar gelagert. Die Schwenkstellung kann dabei mit Hilfe eines Schraubenbolzens 17, der am Hebel 13 bei 19 schwenkbar befestigt ist, einer auf dem Schraubenbolzen 17 angeordneten Druckfeder und einer Flügelmutter 20 eingestellt werden, wobei Schraubenbolzen 17, Feder und Flügelmutter 20 mit einem an der Stange 6 befestigten Ansatz 21 zusammenwirken.

Wenn das Rohr 1 eingeführt werden soll, wird zunächst mit Hilfe der eben beschriebenen Schwenkeinrichtung die Antriebsrolle 15 nach unten weggeschwenkt. Nach Einführen des Rohres 1 wird dann die Rolle 15 wieder nach oben geschwenkt, bis die drei Rollen 10, 12 und 15 das Rohr an drei Punkten berühren, so daß dann die Vorrichtung durch Betätigung des Motors 16 um das Rohr herum in Rotation versetzt werden kann.

Die Schweißung wird dabei mit Hilfe des Schweißkopfes 18 ausgeführt, dem über einen Schlauch 22 Schutzgas und Schweißstrom zugeführt werden. Der Schweißkopf 18 ist dabei an einem Schweißarm 23 befestigt, der bei 24 schwenkbar so gelagert ist, daß er (vom Rohr weg) nach oben geschwenkt werden kann. Die Schwenkachse ist dabei wiederum um eine zu dieser Schwenkachse senkrechte Drehachse drehbar, die im plattenförmigen Element 3 gelagert ist, so daß der Schwenkarm in Fig. 2 nicht nur nach links geklappt werden kann, sondern anschließend auch zum Betrachter hin, das heißt seitlich verschwenkt werden kann.

Durch eine Zugfeder 26, die am plattenförmigen Element 3 und am Schweißarm 23 befestigt ist, wird der Schweißarm und damit das Schweißwerkzeug nach unten gezogen, das heißt in Richtung auf das Rohr zu. In der geöffneten Stellung wird dabei durch geeignete Wahl von Befestigungspunkten der Feder erreicht, daß der Schweißarm in der geöffneten Stellung verbleibt.

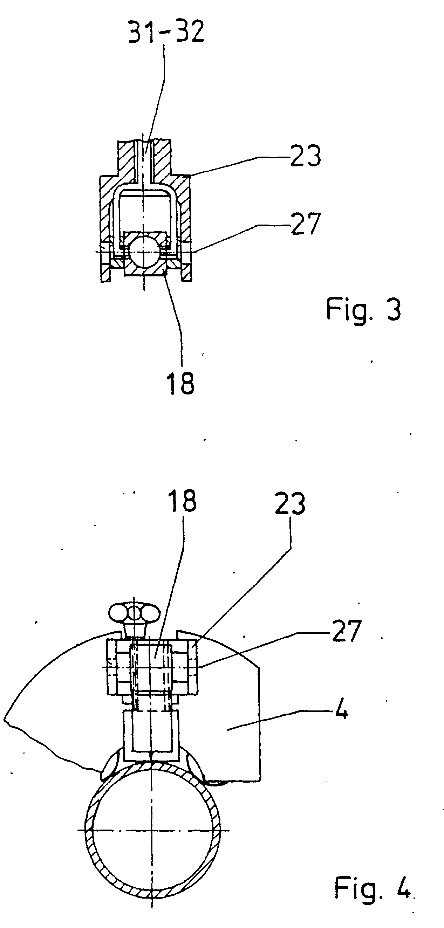

Wie dies in Fig. 3 im Detail gezeigt ist, besteht der Schwenkarm 23 aus zwei plattenförmigen Elementen und zwischen denen der Schweißkopf 18 mit Hilfe einer Achse 27 schwenkbar gelagert ist ; der Schweißkopf 18 kann dabei in einer gewünschten Schwenkstellung mit Hilfe einer Flügelmutter festgezogen werden.

Auf der Schwenkachse 27 sitzt in Fig. 3 links neben dem Schweißkopf 21 noch ein die Schwenkachse 27 umschließendes. Element, das links die Schwenkachse 27 dichtend umschließt, rechts davon aber einen Hohlraum aufweist, der um die Schwenkachse 27 herum verläuft und nach rechts hin mit geeigneten Mitteln gegen den Schweißkopf 18 abgedichtet ist. In den Hohlraum dieser Elementes wird über eine Rohrleitung und eine entsprechende Bohrung nun das Schutzgas in den Raum eingeführt, von wo es durch eine Bohrung in einem Kanal in der Schwenkachse 27 in die Mittelbohrung des Schweißkopfes gelangt, von wo es aus dem Schweißkopf an der Schweißstelle heraustreten kann. Die elektrische Verbindung des Schweißkopfes 18 mit der Stromquelle findet auf demselben Wege statt, indem die sich berührenden Elemente elektrisch leitfähig miteinander verbunden sind. Auf diese Weise kann der Schweißkopf in verschiedene Schwenkstellungen eingestellt werden, ohne daß dabei Schläuche oder elektrische Leitungen die Verschwenkbarkeit behindern.

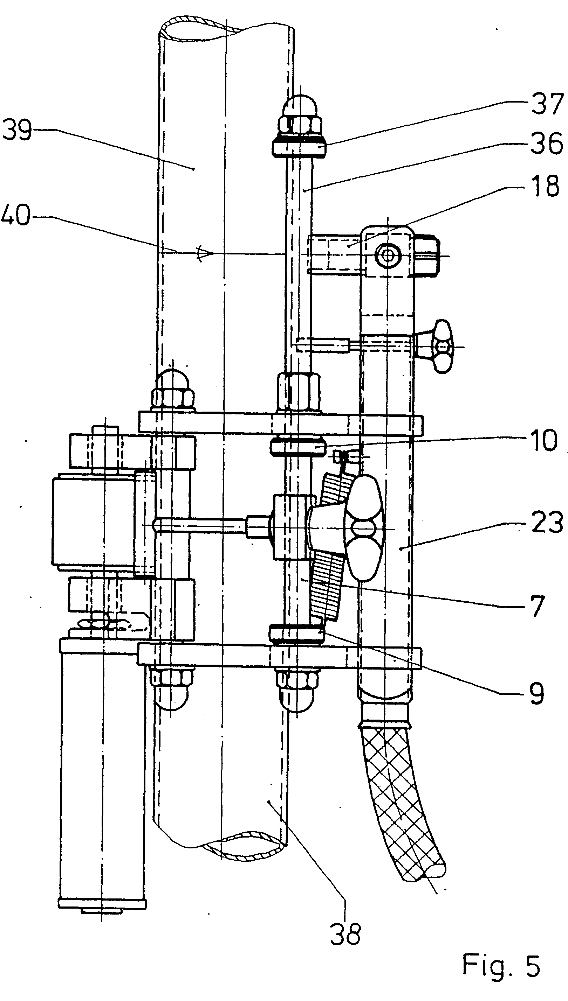

Wie dies in Fig. 4 gezeigt ist, braucht der untere Anschlag in der Arbeitsstellung des Schweißarmes nicht die Platte 4 zu sein ; vielmehr kann für diesen Zweck eine Rändelschraube, Rändelmutter oder dergleichen vorgesehen sein, so daß die Höhe des Schweißkopfes über dem zu schweißenden Rohr eingestellt werden kann.

Die Vorrichtung der Fig. 5 zeichnet sich gegenüber der bisher beschriebenen Ausführungsform dadurch aus, daß auf die stangenförmigen Elemente 7 und 8 noch Zusatzachsen zur Verlängerung dieser stangenförmigen Elemente aufgesteckt werden können. Von diesen Zusatzachsen ist die Zusatzachse 36 für das stangenförmige Element 7 in Fig. 5 gezeigt. Am Ende jeder dieser Zusatzachsen befindet sich eine zusätzliche Rolle, die ebenfalls kugelgelagert ist und von denen eine bei 37 gezeigt ist. Die Mantelfläche dieser Zusatzrollen fällt dabei mit der Verlängerung der Mantelflächen der Rollen an den entsprechenden stangenförmigen Elementen 7 bzw. 8 zusammen.

Die Wirkungsweise dieser Vorrichtung ist die folgende.

Wenn an einem bereits fertiggestellten Teil einer Rohranlage (durch das untere Rohrstück 38 in Fig. 5 dargestellt) ein weiteres Rohr 39 angesetzt werden soll, so muß zunächst eine Heftschweißung durchgeführt werden. Zu diesem Zweck wird die erfindungsgemäße Vorrichtung so am Ende des bereits fertiggestellten Teiles 38 der Rohrleitung befestigt, daß der Schweißkopf 18 sich im Bereich des Rohrendes 40 befindet, an dem das neue Rohr 39 anstoßen soll. Dabei wird die Anordnung so getroffen, daß die feststehenden Rollen sich unten befinden. In dieser Stellung wird dann durch Verschwenken und Anziehen der Rolle 15 die Vorrichtung am Rohrende befestigt. Dann werden die beiden Zusatzachsen für die stangenförmigen Elemente 7 und 8 aufgesetzt, so daß die beiden zusätzlichen Rollen, von denen in der Figur eine bei 37 gezeigt ist, eine solche Auflagefläche für das neue Rohr 39 bilden, daß die Rohre 38 und 39 ohne Absatz an der Trennstelle 40 ineinander übergehen. Hier kann dann rechts eine Heftschweißung durchgeführt werden. Anschließend wird die Vorrichtung um 180° gedreht, so daß links eine Heftschweißung durchgeführt werden kann. Bei der anschließenden Herstellung der geschlossenen Schweißnaht können dann die Zusatzachsen 36 wieder abgenommen werden, was auch notwendig ist, wenn in der Nähe von Rohrkrümmungen und dergleichen geschweißt werden soll.

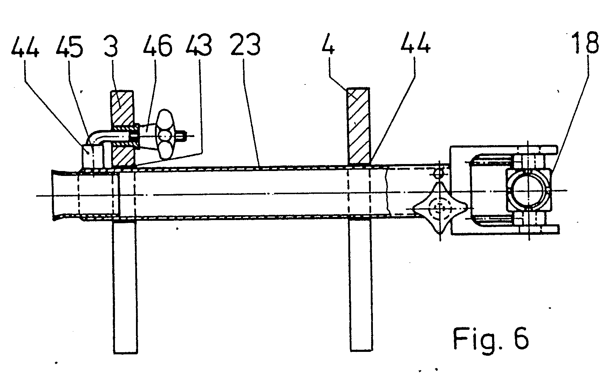

Bei der Ausführungsform der Fig. 6 wird der Schwenkarm 23 für das Schweißwerkzeug 18 ähnlich wie bei den vorherigen Ausführungsformen (siehe z. B. Fig. 1) durch nach außen offene Ausnehmungen 43 bzw. 44 in den Platten 3 bzw. 4 geführt. Im hinteren Teil (d. h. vom Schweißwerkzeug 18 weggerichteten Teil) weist der Arm 23 einen seitlichen Vorsprung 44 auf, der eine nach hinten offene Ausnehmung aufweist, die eine Schwenkachse 45 aufnehmen kann, die L-förmig gebogen ist, so daß ihr vorderes Ende und damit auch der Bereich der eigentlichen Schwenkachse mit Hilfe einer Flügelmutter 46 oder dergleichen nach vorne oder nach hinten verstellt werden kann. Dadurch kann der Schwenkarm 23 leicht von der Vorrichtung gelöst werden, indem er nach vorne und oben weggezogen wird. Andererseits kann er wieder auf die Vorrichtung aufgesetzt werden, indem die Ausnehmung des Vorsprunges 44 über die Schwenkachse 45 geschoben wird; diese Stellung bleibt dann stabil, da die Feder 26 (siehe Fig. 2) eine nach hinten gerichtete Kraft ausübt.

## Patentansprüche

1. Vorrichtung zum Anbringen einer Umfangsschweißnaht an einem zylindrischen Rohr (1), die auf das Rohr (1) aufsetzbar ist und mit einem Drehantrieb (16) für eine Rotationsbewegung des Schweißwerkzeuges um die Rohrachse versehen ist, und die mehrere an der Vorrichtung befestigte, in Umfangsrichtung in einem Abstand angeordnete, drehbare Rollen (10, 12, 15) aufweist, von denen mindestens eine (15) zwischen Schwenkarmen (13), die an plattenförmigen Elementen (3, 4) schwenkbar befestigt sind, angeordnet und an denselben drehbar gelagert und mit dem Antrieb (16) verbunden ist, wobei in Querschnittsrichtung des Rohrs (1) der Raum zwischen den Rollen (10, 12, 15) bei wenigstens teilweise weggeschwenkter Antriebsrolle (15) eine seitliche Einführöffnung mit größeren Abmessungen als das Rohr (1) aufweist, dadurch gekennzeichnet, daß zwei fest angeordnete (10, 12) und nur eine weitere schwenkbare mit dem Antrieb (16) verbundene Rolle (15) vorgesehen sind und daß an den Schwenkarmen (13) eine Zugstange (17) mit einer mit Hilfe einer Schraube und einer Mutter (20) einstellbaren Federkraft zum Drücken der Antriebsrolle (15) gegen das Rohr (1) angreift.

2. Vorrichtung nach Anspruch 1, dadurch gekennzeichnet, daß die fest angeordneten Rollen (10, 12) als Rollenpaare (9, 10 ; 11, 12) ausgebildet sind.

3. Vorrichtung nach Anspruch 1 oder 2, dadurch gekennzeichnet, daß die Rollen (9 bis 12, 15) kugelgelagert sind.

4. Vorrichtung nach einem der Ansprüche 1 bis 3, dadurch gekennzeichnet, daß das Schweißwerkzeug (18) an einem schwenkbaren Arm (23) befestigt ist.

5. Vorrichtung nach Anspruch 4, dadurch gekennzeichnet, daß der schwenkbare Arm (23) federbelastet (26) ist.

6. Vorrichtung nach Anspruch 4 oder 5, dadurch gekennzeichnet, daß der schwenkbare Arm (23) um seine Längsachse drehbar ist.

7. Vorrichtung nach einem der Ansprüche 4 bis 6, dadurch gekennzeichnet, daß sie einen verstellbaren Anschlag für den Arm (23) aufweist.

8. Vorrichtung nach einem der Ansprüche 1 bis 7, dadurch gekennzeichnet, daß das Schweißwerkzeug (18) am Arm (23) schwenkbar, insbesondere um 360° schwenkbar, befestigt ist.

9. Vorrichtung nach Anspruch 8, dadurch gekennzeichnet, daß Strom- und Schutzgasleitung durch die Schwenkachse (27) verlaufen.

10. Vorrichtung nach einem der Ansprüche 1 bis 9, dadurch gekennzeichnet, daß sie weniger als 6 cm vom Rohr (1) absteht.

11. Vorrichtung nach einem der Ansprüche 1 bis 10, dadurch gekennzeichnet, daß sie demontierbare Verlängerungsachsen (36) mit daran drehbar gelagerten Zusatzrollen (37) aufweist.

12. Vorrichtung nach einem der Ansprüche 1 bis 11, dadurch gekennzeichnet, daß die fest angeordneten Rollen (9, 10 ; 11, 12) und die Schwenkarme (13) für die Antriebsrolle (15) zwischen den zwei Platten (3, 4) angeordnet sind, mit denen sie lösbar verbunden sind.

13. Vorrichtung nach einem der Ansprüche 4 bis 12, dadurch gekennzeichnet, daß ein veränderbarer Anschlag für den Arm (23) für das Schweißwerkzeug (18) vorgesehen ist.

14. Vorrichtung nach einem der Ansprüche 4 bis 13, dadurch gekennzeichnet, daß der Arm (23) für das Schweißwerkzeug (18) lösbar am Gerät befestigt ist.

15. Vorrichtung nach Anspruch 14, dadurch gekennzeichnet, daß der Arm (23) in nach außen offene Ausnehmungen (43, 44) der Platten (3, 4) einführbar und durch eine in Richtung der Rohrerstreckung offene Ausnehmung, die eine Schwenkachse (45) umgreift, schwenkbar gehalten ist.

16. Vorrichtung nach Anspruch 15, dadurch gekennzeichnet, daß die Schwenkachse (45) in Rohrrichtung verstellbar ist.

17. Vorrichtung nach einem der Ansprüche 1 bis 16, dadurch gekennzeichnet, daß das Schweißwerkzeug (18) über eine der Platten (3, 4) seitlich herausragt.

## Claims

1. An apparatus for applying a peripheral weld seam to a cylindrical pipe (1), which can be fitted on to the pipe (1) and is provided with a rotary drive means (16) for a rotating movement of the welding tool about the pipe axis, and which has a plurality of rotatable rollers (10, 12, 15) mounted on the apparatus and disposed spaced apart in the peripheral direction, at least one (15) of which rollers is disposed between pivot arms (13) pivotably mounted on platelike members (3, 4), is mounted to rotate thereon and is connected with the drive means (16), wherein in the cross-sectional direction of the pipe (1) the space between the rollers (10, 12, 15) has a side entry opening of larger dimensions than the pipe (1) when the drive roller (15) is at least partly swung out of the way, characterised in that two fixed rollers (10, 12) and only one further roller (15), which is pivotably connected with the drive means (16), are provided, and in that a draw rod (17) engages on the pivot arms (13) under a spring force, which is adjustable by means of a screw and a nut (20), so as to press the drive roller (15) against the pipe (1).

2. An apparatus according to Claim 1, characterised in that the fixed rollers (10, 12) are in the form of pairs of rollers (9, 10 ; 11, 12).

3. An apparatus according to Claim 1 or 2, characterised in that the rollers (9 to 12, 15) are mounted on ball bearings.

4. An apparatus according to any one of Claims 1 to 3, characterised in that the welding tool (18) is mounted on a pivotable arm (23).

5. An apparatus according to Claim 4, characterised in that the pivotable arm (23) is springloaded (26).

6. An apparatus according to Claim 4 or 5, characterised in that the pivotable arm (23) is rotatable about its longitudinal axis.

7. An apparatus according to any one of Claims 4 to 6, characterised in that it has an adjustable stop for the arm (23).

8. An apparatus according to any one of Claims 1 to 7, characterised in that the welding tool (18) is pivotably mounted on the arm (23), and in particular is pivotable through 360º.

9. An apparatus according to Claim 8, characterised in that lines for protective gas and current pass through the pivot axis (27).

10. An apparatus according to any one of Claims 1 to 9, characterised in that it projects from the pipe (1) by less than 6 cm.

11. An apparatus according to any one of Claims 1 to 10, characterised in that it has detachable extension shafts (36) with auxiliary rollers (37) mounted to rotate thereon.

12. An apparatus according to any one of Claims 1 to 11, characterised in that the fixed rollers (9, 10 ; 11, 12) and the pivot arms (13) for the drive roller (15) are disposed between the two plates (3, 4) to which they are releasably connected.

13. An apparatus according to any one of Claims 4 to 12, characterised in that a variable stop is provided for the arm (23) for the welding tool (18).

14. An apparatus according to any one of Claims 4 to 13, characterised in that the arm (23) for the welding tool (18) is releasably secured to the appliance.

15. An apparatus according to Claim 14, characterised in that the arm (23) can be inserted in outwardly open recesses (43, 44) of the plates (3, 4) and is held pivotably by a recess which is open in the direction in which the pipe extends and which embraces the pivot axis (45).

16. An apparatus according to Claim 15, characterised in that the pivot axis (45) is adjustable in the direction of the pipe.

17. An apparatus according to any one of Claims 1 to 16, characterised in that the welding tool (18) protrudes laterally through one of the plates (3, 4).

## Revendications

1. Dispositif pour la formation d'un cordon de soudure circonférentiel sur un tube cylindrique, pouvant être posé sur le tube et muni d'un mécanisme d'entraînement en rotation pour produire un mouvement de rotation de l'outil de soudage autour de l'axe du tube et comprenant plusieurs galets rotatifs (10, 12, 15) fixés au dispositif et montés en position fixe à distance l'un de l'autre dans la direction circonférentielle, galets parmi lesquels l'un (15) au moins est disposé entre des bras pivotants (13) qui sont fixés à des éléments en plaque (3, 4) de façon à pouvoir pivoter, est monté à rotation sur ces bras et est raccordé au mécanisme d'entraînement (16), l'espace entre les galets (10, 12, 15) présentant en direction de la section transversale du tube (1), lorsque le galet moteur (15) a été écarté au moins partiellement par pivotement une ouverture d'insertion latérale ayant des dimensions plus grandes que le tube (1), caractérisé en ce qu'il est prévu deux galets (10, 12) montés en position fixe et un seul autre galet (15) pivotant raccordé au mécanisme d'entraînement, et en ce qu'une barre de traction (17) attaque les bras pivotants (13) avec une force élastique réglable au moyen d'une vis et d'un écrou (20) pour presser le galet moteur (15) contre le tube (1).

2. Dispositif selon la revendication 1, caractérisé en ce que les galets (10, 11) montés en position fixe sont réalisés sous forme de paires de galets (9, 10 ; 11, 12).

3. Dispositif selon la revendication 1 ou 2, caractérisé en ce que les galets (9 à 12, 15) sont montés sur roulements à billes.

4. Dispositif selon l'une quelconque des revendications 1 à 3, caractérisé en ce que l'outil de soudage (18) est fixé à un bras pivotant (23).

5. Dispositif selon la revendication 4, caractérisé en ce que le bras pivotant (23) est sollicité par un ressort (26).

6. Dispositif selon la revendication 4 ou 5, caractérisé en ce que le bras pivotant (23) peut tourner autour de son axe longitudinal.

7. Dispositif selon l'une quelconque des revendications 4 à 6, caractérisé en ce qu'il comporte une butée réglable pour le bras (23).

8. Dispositif selon l'une quelconque des revendications 1 à 7, caractérisé en ce que l'outil de soudage (18) est fixé au bras (23) de manière à pouvoir pivoter et, en particulier, pouvoir pivoter de 360°.

9. Dispositif selon la revendication 8, caractérisé en ce que des conduites de courant et de gaz protecteur passent par l'axe de pivotement (27).

10. Dispositif selon l'une quelconque des revendications 1 à 9, caractérisé en ce qu'il déborde du tube (1) de moins de 6 cm.

11. Dispositif selon l'une quelconque des revendications 1 à 10, caractérisé en ce qu'il comporte des axes de prolongement démontables (36) avec des galets supplémentaires (37) qui sont montés à rotation sur eux.

12. Dispositif selon l'une quelconque des revendications 1 à 11, caractérisé en ce que les galets (9, 10 ; 11, 12) montés en position fixe et les bras pivotants (13) pour le galet moteur (15) sont montés entre les deux plaques (3, 4) auxquelles ils sont fixés de façon amovible.

13. Dispositif selon l'une quelconque des revendications 4 à 12, caractérisé en ce qu'il est prévu une butée réglable pour le bras (23) de montage de l'outil de soudage (18).

14. Dispositif selon l'une quelconque des revendications 4 à 13, caractérisé en ce que le bras (23) pour l'outil de soudage (18) est fixé à l'appareil de façon amovible.

15. Dispositif selon la revendication 14, caractérisé en ce que le bras (23) peut être inséré dans des encoches ouvertes vers l'extérieur (43, 44) formées dans les plaques (3, 4) et est retenu de façon à pouvoir pivoter par un évidement qui est ouvert dans la direction longitudinale du tube et qui engaine un axe de pivotement (45).

16. Dispositif selon la revendication 15, caractérisé en ce que l'axe de pivotement (45) est réglable dans la direction du tube.

17. Dispositif selon l'une quelconque des revendications 1 à 16, caractérisé en ce que l'outil de soudage (18) fait saillie latéralement sur l'une des plaques (3, 4).

EP 0 211 852 B1

Fig. 1

Brennerkopf drehbar

Fig. 2

31-32

23

27

18

Fig. 3

18    23

27

4

Fig. 4

2

Fig. 5

44  45  3  46  43  23  4  44  18

Fig. 6